# EUROPÄISCHE PATENTANMELDUNG

(11) **EP 2 273 239 A1**
(43) Veröffentlichungstag der Anmeldung: **12.01.2011**
(21) Anmeldenummer: 10010494.2
(22) Anmeldetag: 13.10.2004
(51) Int. Cl.: G01F 23/296

(54) **Schwingungskörper für eine Füllstandsmessvorrichtung mit Abgleichschraube zur Verstellung der Resonanzfrequenz**

(30) Priorität: 27.02.2004 DE 102004009495
(62) Teilanmeldung aus: 04024328.9
(71) Anmelder: VEGA Grieshaber KG, 77709 Wolfach (DE)
(72) Erfinder: Ohmayer, Gerd, 77716 Haslach (DE)
(74) Vertreter: Patentanwälte Westphal, Mussgnug & Partner

(57) **Zusammenfassung**

Die Erfindung bezieht sich auf eine Füllstandsmessvorrichtung mit zwei ineinander angeordneten Schwingungskörpern (2, 3). Im inneren Schwingungskörper (2) ist in dessen Innenraum (32) ein Abgleichkörper (5) eingesetzt. Der Abgleichkörper (5) weist einen zumindest teilweise elastischen Abschnitt (52) auf, wobei im entspannten Zustand der Außendurchmesser (ds*) des elastischen Abschnitts (52) größer als der Innendurchmesser (dgi) des Innenraums (32) ist. Dadurch wird eine gute Ankopplung und zugleich ein Verstellschutz des Abgleichkörpers (5) relativ zum inneren Schwingungskörper (3) erzielt. Zum nachträglichen Abgleichen des Abgleichkörpers (5) ist dieser mit einem Außengewinde (51) ausgestattet, welches in ein Innengewinde (33) des Innenraums (32) eingreift. Ein Schlitz (52) zum Verstellen des Abgleichkörpers (5) ist über eine Zugangsöffnung (6) zugreifbar, wobei die Zugangsöffnung (6) sich in rückseitiger Richtung durch die einzelnen Komponenten der Füllstandsmessvorrichtung (1) einschließlich einer Antriebs- und/oder Empfangsvorrichtung (7) hindurch erstreckt.

## Beschreibung

### Beschreibung

Füllstandsmessvorrichtung, Schwingungskörper und Abgleichkörper für eine Füllstandsmessvorrichtung und Antriebs- und/oder Empfangsvorrichtung dafür

Die Erfindung bezieht sich auf einen Schwingungskörper für eine Füllstandsmessvorrichtung mit den oberbegrifflichen Merkmalen des Patentanspruchs 1, auf einen Abgleichkörper für einen solchen Schwingungskörper, auf eine Antriebs- und/oder Empfangsvorrichtung für einen solchen Schwingungskörper mit den oberbegrifflichen Merkmalen des Patentanspruchs 9 sowie auf eine Füllstandsmessvorrichtung mit den oberbegrifflichen Merkmalen des Patentanspruchs 14.

Zum Überwachen eines vorbestimmten Füllstands in einem Behälter ist aus DE 196 51 362 C1 eine Füllstandsmessvorrichtung bekannt. Diese weist ein mechanisches Schwingsystem aus zwei Schwingstäben auf, von denen der eine Schwingstab rohrförmig ausgebildet ist und den anderen Schwingstab koaxial umschließt. Jeder der beiden Schwingstäbe ist über ein als Rückstellfeder wirkendes elastisches Halteteil an einem gemeinsamen Träger so befestigt, dass er Schwingungen quer zu seiner Längsrichtung ausführen kann. Eine Antriebsanordnung versetzt die beiden Schwingstäbe in gegensinnige transversale Schwingungen mit der Eigenresonanzfrequenz des mechanischen Schwingsystems. Ein derart ausgebildeter Sensor ist an dem Behälter so montiert, dass der rohrförmige äußere Schwingstab mit dem Füllgut im Behälter in Berührung kommt, wenn dieses den zu überwachenden Füllstand erreicht. Zum Erfassen der Schwingungen dient eine Empfangseinrichtung. Eine Auswerteschaltung dient zur Auslösung von Anzeige- oder Schaltvorgängen in Abhängigkeit von der Schwingungsamplitude des mechanischen Schwingungssystems.

Zur Kompensation von Änderung der Resonanzfrequenz des von dem äußeren Schwingstab und seinem elastischen Halteteil gebildeten Schwingungsgebilde im Fall einer Ansatzbildung am außenseitigen äußeren Schwingstab ist an den inneren Schwingstab eine Kompensationsmasse als Abgleichkörper in der Längsrichtung des Schwingstabs verstellbar angeordnet. Durch Verstellung der Kompensationsmasse kann die Resonanzfrequenz des von dem inneren Schwingstab und seinem elastischen Halteteil gebildeten Schwingungsgebildes an die Resonanzfrequenz des äußeren Schwingungsgebildes angeglichen werden.

Zur Aufnahme und Führung des Abgleichkörpers ist der vorderseitige Abschnitt des inneren Schwingstabes, d. h. der in den Behälter weisende Abschnitt, rohrförmig ausgebildet. Der Abgleichkörper weist einen entsprechenden Außenumfang auf, so dass er innerhalb des rohrförmigen Abschnitts des inneren Schwingstabes verstellt werden kann. Zum Verstellen des Abgleichkörpers dient eine Stange, welche durch eine zentrale Durchgangsöffnung längs der Längsachse des inneren Schwingstabes und durch dessen Rückseite zu einem Stellglied führt, welches im außenseitigen Bereich des Trägers angeordnet ist. Das Stellglied wird über Signale von der Erregungs- und Auswerteschaltung angesteuert. Nachteilhaft bei einer solchen Anordnung ist u. a. die zentrale Anordnung des Stellgliedes und der durch die Längsachse führenden Stange zum Verstellen des Abgleichkörpers, da die Antriebs-und Empfangsvorrichtungen dadurch als baulich getrennte Einheiten im seitlichen Bereich des Trägers bzw. im Bereich der elastischen Übergangsbereiche zwischen Träger und dem äußeren Schwingstab baulich getrennt und als diskrete Einheiten anzuordnen sind. Abgesehen vom baulichen Aufwand führt dies auch zu ungleichmäßigen Schwingungen vorallem im Falle nicht ganz exakter Anordnungen der Antriebs- und Empfangsvorrichtungen.

Die Aufgabe der Erfindung besteht darin, eine derartige Füllstandsmessvorrichtung mit Blick auf einen baulich einfachen Aufwand, ein besseres Schwingungsverhalten hinsichtlich Antrieb und Empfang sowie eine einfache Einstellbarkeit des Abgleichkörpers zu verbessern.

Diese Aufgabe wird durch einen Schwingungskörper für eine Füllstandmessvorrichtung mit den Merkmalen des Patentanspruchs 1, durch einen Abgleichkörper dafür mit den Merkmalen des Patentanspruchs 7, durch eine Antriebs-und/oder Empfangsvorrichtung für insbesondere eine solche Anordnung mit den Merkmalen des Anspruchs 9 bzw. durch eine Füllstandsmessvorrichtung mit den Merkmalen des Anspruchs 14 gelöst. Neben der individuellen vorteilhaften Einsetzbarkeit dieser einzelnen Vorrichtungen ergibt sich eine besonders vorteilhafte Ausgestaltung durch Kombination all dieser, da sich durch die Kombination eine besonders vorteilhafte und wechselseitig fördernde Anordnung ergibt.

Demgemäß ist besonders vorteilhaft ein innerer Schwingungskörper für eine Füllstandsmessvorrichtung, wobei der innere Schwingungskörper zumindest teilweise einen Innenraum aufweist, in dem ein Abgleichkörper verstellbar angeordnet ist, wenn der Abgleichkörper einen elastischen Abschnitt aufweist, wobei ein Außendurchmesser des zumindest teilweise elastischen Abschnitts in einem entspannten Zustand größer als ein Innendurchmesser von dem Innenraum ist. Durch diese Dimensionierung wird der elastische Abschnitt und darüber der gesamte Abstimmkörper in dem Innenraum in einer gewünschten Position innerhalb des Innenraums gehalten. Die Elastizitätsparameter des Abgleichkörpers bestimmen dabei die Stärke bzw. Festigkeit der Verbindung. Die Verbindungsfestigkeit ist sowohl mit Blick auf die erforderliche Kraft zum Verstellen des Abgleichkörpers innerhalb des Innenraums als auch mit Blick auf ein eigenständiges Verstellen durch Erschütterungsbewegungen oder dergleichen geeignet festlegbar.

Eigenständig ist somit auch der Abgleichkörper selber für einen solchen Schwingungskörper von besonders vorteilhafter Ausgestaltung. Eigenständig vorteilhaft ist auch eine Antriebs- und/oder Empfangsvorrichtung, welche insbesondere in Verbindung mit einem solchen inneren Schwingungskörper bzw. mit einer entsprechenden Füllstandmessvorrichtung einsetzbar ist, wenn die Antriebs- und/oder Empfangsvorrichtung eine Antriebs- und/oder Empfangseinrichtung zum Erzeugen bzw. Empfangen von Schwingungen zumindest eines Schwingungskörpers und einen Schwingungsübertragungsabschnitt aufweist, wobei der Schwingungsübertragungsabschnitt zum Übertragen einer Schwingung zwischen einem Schwingungskörper einerseits und andererseits der Antriebs- und/oder Empfangseinrichtung ausgebildet ist und wobei die Antriebs- und/oder Empfangseinrichtung, der Schwingungsübertragungsabschnitt und der zumindest eine Schwingungskörper sich im Betriebszustand längs einer Vorrichtungs-Längsachse erstrecken. Die Antriebs- und/oder Empfangsvorrichtung ist vorteilhaft dadurch ausgestaltet, dass in einer Richtung längs oder parallel der Vorrichtungs-Längsachse eine Zugangsöffnung bzw. Durchgangsöffnung durch die Antriebs- und/oder Empfangsvorrichtung, insbesondere durch die Antriebs- und/oder Empfangseinrichtung darin und durch den Schwingungsübertragungsabschnitt zum Zugriff auf den zumindest einen Schwingungskörper ausgebildet ist. Eine solche Anordnung ermöglicht somit den Zugriff auf den Schwingungskörper von der Rückseite der Vorrichtung aus durch die Antriebs- und/oder Empfangsvorrichtung hindurch. Trotzdem wird eine symmetrische Anordnung der Antriebs- und/oder Empfangsvorrichtung und um die zentrale Längsachse der Gesamtvorrichtung hindurch von der Rückseite einer Füllstandsmessvorrichtung ermöglicht, so dass Manipulationen des Schwingungskörpers von der Rückseite aus in eingebautem und/oder funktionsfähigen Zustand möglich sind. Insbesondere wird dadurch ermöglicht, auf einen Abgleichkörper innerhalb des Schwingungskörpers zu dessen Abstimmung zuzugreifen.

Besonders vorteilhaft ist demgemäß eine Füllstandsmessvorrichtung mit zwei ineinander angeordneten Schwingungskörpern, die relativ zueinander in Schwingungen versetzbar sind, einer Antriebs- und/oder Empfangseinrichtung zum Anregen zumindest eines der Schwingungskörper bzw. zum Erfassen einer Schwingung bzw. Anregung zumindest eines der Schwingungskörper und einer Befestigungseinrichtung zum Befestigen der Schwingungskörper an der Antriebs- und/oder Empfangseinrichtung, wobei der äußere Schwingungskörper über einen zumindest teilweise elastisch wirkenden Verbindungsabschnitt an der Befestigungseinrichtung befestigt ist. Vorteilhaft ist dabei, dass die Befestigungseinrichtung eine Durchgangsöffnung zum Durchführen eines Verbindungselements aufweist, wobei das Verbindungselement an dem Verbindungsabschnitt befestigt ist und durch die Durchgangsöffnung hindurch zu der Befestigungseinrichtung führt und über diese die Antriebs- und/oder Empfangsvorrichtung rückseitig gegen den Verbindungsabschnitt spannt. Vorteilhafterweise wird dabei das Verbindungselement durch die Durchgangsöffnung der Befestigungseinrichtung derart reibungsfrei hindurchgeführt, dass Schwingen eines rückseitigen Abschnitts der Antriebs- und/oder Empfangsvorrichtung über das Verbindungselement der Befestigungseinrichtung auf den Verbindungsabschnitt und/oder auf den äußeren Schwingungskörper übertragen werden.

Vorteilhafte Ausgestaltungen sind Gegenstand abhängiger Ansprüche.

Vorteilhafterweise weist der Abgleichkörper einen Schlitz als Elastizitätsschlitz zum Zusammendrücken des elastischen Abschnitts auf einen Außendurchmesser kleiner oder gleich dem Innendurchmesser des Innenraums des inneren Schwingungskörpers auf. Ein solcher vorzugsweise vorderseitiger Schlitz ermöglicht somit einen ansonsten in diesem Bereich zu breiten Abschnitt zusammenzudrücken, so dass eine Umfangsverringerung des ansonsten mit zu großem Außendurchmesser ausgebildeten Abschnitts des Abgleichkörpers auf einen Außendurchmesser kleiner oder gleich dem Innendurchmesser des inneren Schwingungskörpers ermöglicht wird. Vorteilhafterweise ist dieser Schlitz oder ein anderer Schlitz auf der gegenüberliegenden Rückseite des Abgleichkörpers zum Verstellen des Abgleichkörpers ausgebildet, wobei der Abgleichkörper mit einem Außengewinde und der Innenraum des Schwingungskörpers mit einem entsprechenden Innengewinde zum schraubenden Verstellen des Abgleichkörpers im Innenraum ausgestattet ist. Das Verstellen des Abgleichkörpers ist somit mit Hilfe eines langen Schraubenziehers oder einer äquivalenten, motorisch betriebenen Verstelleinrichtung möglich, welcher auch im eingebauten Zustand von der Rückseite der Füllstandsmessvorrichtung durch die Durchgangsöffnung hindurch zugreifbar ist.

Die Zugangsöffnung in dem Schwingungskörper ist somit derart ausgebildet, dass sie zum Verstellen des Abgleichkörpers zum Abgleichkörper hin führt. Prinzipiell kann die Zugangsöffnung dabei von der Vorderseite aus ausgebildet sein, wobei eine Verstellung des Abgleichkörpers dann nur von der Innenseite des Behälters bei eingebauter Füllstandsmessvorrichtung oder ansonsten nur nach deren Ausbau möglich ist. Bevorzugt wird eine Zugangsöffnung von der Rückseite aus, so dass ein Verstellen des Abgleichkörpers auch im eingebauten Zustand der Füllstandsmessvorrichtung von der Rückseite bzw. Außenseite aus möglich ist. Besonders vorteilhaft ist eine Ausgestaltung, bei der die Zugangsöffnung auch durch die Antriebs- und/oder Empfangseinrichtung hindurchführt, so dass diese symmetrisch um die Längsachse der Gesamtanordnung herum angeordnet werden kann.

Die Antriebs- und/oder Empfangsvorrichtung ist besonders dann vorteilhaft, wenn die Zugangsöffnung als Zugriffsöffnung zu einem Abgleichkörper ausgebildet ist, wobei der Abgleichkörper innerhalb des zumindest einen Schwingungskörpers zum Abgleichen des Schwingungskörpers verstellbar angeordnet ist. Dadurch kann beispielsweise bei außenseitig am ersten Schwingunskörper anhaftenden Material ein Abgleich des Schwingungsverhaltens des inneren Schwingungskörpers an das veränderte Schwingungsverhalten des äußeren Schwingungskörpers vorgenommen werden.

Vorteilhafterweise ist dabei die eigentliche Antriebs- und/oder Empfangsvorrichtung, d. h. die Baueinheit mit den Schwingungselementen bzw. Sensorelementen, symmetrisch um die Zugangsöffnung herum ausgebildet. Vorteilhafterweise wird dabei die Zugangsöffnung in Form einer zentrischen Bohrung ausgebildet, so dass beispielsweise der Schaft eines Schraubenziehers einfach hindurch geführt werden kann.

Die Antriebs- und/oder Empfangsvorrichtung ist vorzugsweise mit einer Befestigungseinrichtung zum Befestigen der Antriebs- und/oder Empfangsvorrichtung im Bereich seitlich der eigentlichen Antriebs- und/oder Empfangsvorrichtung an einem Befestigungselement des zumindest einen Schwingungskörpers ausgestattet. Durch eine solche Anordnung wird die eigentliche Antriebs- und/oder Empfangseinrichtung mit den Schwingungselementen bzw. Sensorelementen seitlich umgriffen und kann mit einer rückseitigen Kraftbeaufschlagung gleichmäßig gegen die Befestigungseinrichtung gedrückt werden. Dies ermöglicht eine besonders gleichmäßige und axiommetrische Einspeisung von Schwingungen von der Antriebseinrichtung in den Bereich des zumindest einen Schwingungskörpers bzw. eine entsprechend gleichmäßige Rückleitung von Schwingungen des Schwingungskörpers zu den Komponenten der Empfangseinrichtung.

Mit einer solchen Anordnung wird vorteilhafterweise der Abgleich eines Schwingstabes ohne mechanisches Abdrehen der Schwingmembran ermöglicht. Gegenüber einer Anordnung mit einem rückseitigen Stellglied, welches eine zentrale Schwingungsübertragung verhindert, wird außerdem durch die insgesamt hindurchführende Zugangsbohrung auch das axiommetrische Übertragen von Schwingungen ermöglicht. Vorteilhafterweise können derartige Anordnungen auch bei hohen Betriebstemperaturen von beispielsweise 250° C betrieben werden. Mindestwanddicken der Schwingmembran, d. h. des elastischen Abschnitts zwischen der Befestigungseinrichtung und dem jeweiligen Schwingkörper sind selbst bei einer Dimensionierung größer oder gleich 1 mm möglich.

Ein Ausführungsbeispiel wird nachfolgend anhand der Zeichnung näher erläutert. Es zeigen:
- Fig. 1: eine Schnittansicht durch eine Füllstandsmessvorrichtung mit einem verstellbaren Abgleichkörper und einer symmetrisch um die Längsachse angeordneten Antriebs- und/oder Empfangsvorrichtung;
- Fig. 2: eine außenseitige Ansicht einer solchen Füllstandsmessvorrichtung;
- Fig. 3: einen solchen Abgleichkörper vergrößert; und
- Fig. 4: eine Schnittdarstellung durch die Antriebs- und/oder Empfangsvorrichtung.

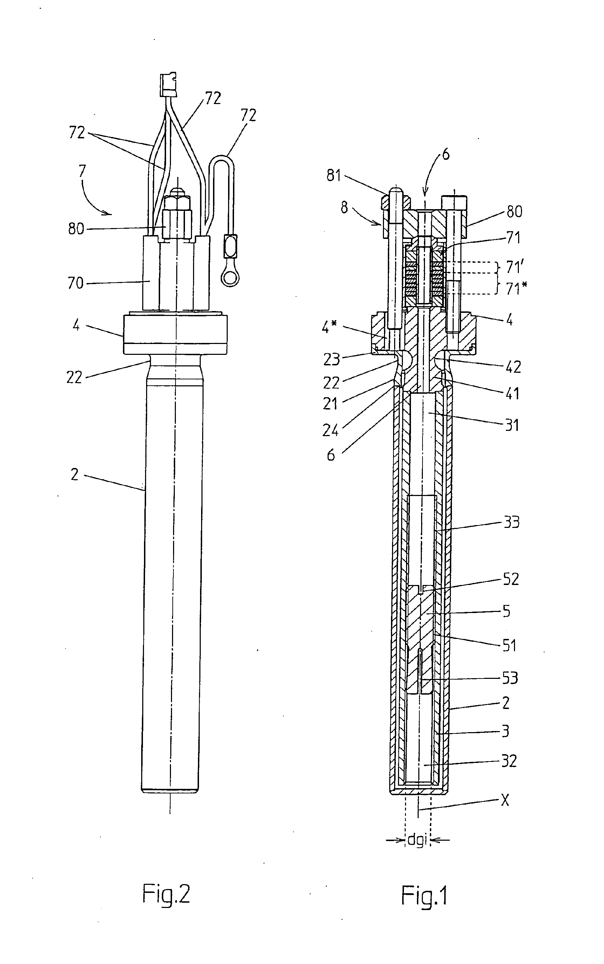

Wie aus Fig. 1 ersichtlich, besteht eine beispielhafte Füllstandsmessvorrichtung 1 aus Schwingungskörpern 2, 3, welche mittels einer Antriebs- und/oder Empfangsvorrichtung angetrieben werden. Beim dargestellten Ausführungsbeispiel handelt es sich um eine kombinierte Antriebs- und/oder Empfangsvorrichtung.

Die beiden Schwingungskörper 2, 3 sind über eine Befestigungseinrichtung 4 miteinander verbunden. Die Befestigungseinrichtung 4 dient zugleich als Träger bzw. Sockel zum Befestigen der Füllstandsmessvorrichtung 1 in einer Gehäuseöffnung eines hinsichtlich dessen Füllstandes zu Überwachenden Behältnisses. Die dargestellte Anordnung ist im Wesentlichen zylindersymmetrisch um eine zentrale Längsachse X herum aufgebaut. Andere Querschnittsformen als kreisförmige Querschnitte sind jedoch prinzipiell ebenfalls umsetzbar. Nachfolgend werden unter vorderseitigen Elementen solche verstanden, welche sich in Richtung eines Behältnisinnenraums erstrecken, und unter rückseitigen Elementen solche verstanden, welche sich zur Behältnisaußenseite hin erstrecken.

Die beiden Schwingungskörper 2, 3 werden durch einen äußeren Schwingungskörper 2 und einen inneren Schwingungskörper 3 ausgebildet, welche beide im Wesentlichen rohrförmig ausgebildet sind. Der innere Schwingungskörper 3 kann dabei im rückseitigen Abschnitt 31 auch bis auf eine längs hindurchführende Durchgangsöffnung einen verengten Innendurchmesser seines Innenraums 32 aufweisen, wobei der Innenraum 32 durch die Innenwandung des inneren Schwingungskörpers 3 begrenzt wird. Je nach Anwendungszweck können die beiden Schwingungskörper 2, 3 vorderseitig offen oder geschlossen ausgebildet sein.

Der äußere Schwingungskörper 2 ist an der Befestigungseinrichtung über einen rückseitigen Verbindungsabschnitt befestigt. Der rückseitige Verbingungsabschnitt besteht aus einem zylinderförmigen Abschnitt 21, welcher sich vom rückseitigen Ende des äußeren Schwingungskörpers 2 in axialer Richtung erstreckt und vorzugsweise durch eine Verjüngung bzw. Einschnürung 22 einen elastischen Abschnitt ausbildet. Der zylinderförmige Abschnitt 21 ist mit dem äußeren Schwingungskörper 2 vorzugsweise über eine Schweißnaht 24 verbunden. Die Einschnürung 22 geht beim dargestellten Ausführungsbeispiel in einen senkrecht zur Längsachse X verlaufenden Verbindungsabschnitt 23 über, welcher vorzugsweise zusammen mit der Einschürung 22 die Funktion einer Membran übernimmt. Der außenseitige Abschnitt des Verbindungsabschnitts 23 ist über beispielsweise eine Schweißverbindung an der Befestigungseinrichtung 4 befestigt. Durch diese Anordnung kann der äußere Schwingungskörper 2 relativ zu der Befestigungseinrichtung 4 in Schwingungen versetzt werden, wobei durch die Membran eine Rückstellkraft auf den äußeren Schwingungskörper 2 einwirkt, so dass die Schwingungen mit der Zeit ausklingen.

Der innere Schwingungskörper 3 ist rückseitig mit einem Abschnitt 41 der Befestigungseinrichtung 4 verbunden, insbesondere verschweißt. Der Abschnitt 41 der Befestigungseinrichtung 4 ragt dabei von dem Hauptkörper der Befestigungseinrichtung 4 in den Raum hinein, welcher durch den zylinderförmigen Abschnitt 21 zum Befestigen des äußeren Schwingungskörpers 2 ausgebildet wird. Der Abschnitt 41 der Befestigungseinrichtung 4 weist ebenfalls eine Einschnürung 42 auf, wobei der Abschnitt 41 der Befestigungseinrichtung 4 durch eine entsprechende Materialwahl und die Einschnürung 42 als ein elastischer Abschnitt in Art einer Membran für den inneren Schwingungskörper 3 wirkt. Einerseits kann der innere Schwingungskörper 3 in Schwingungen versetzt werden, andererseits wird durch die Befestigung über den Abschnitt 41 an der Befestigungseinrichtung 4 und die Einschnürung 42 eine Rückstellkraft auf den schwingenden inneren Schwingungskörper 3 ausgeübt, so dass dessen Schwingung mit der Zeit abklingt.

In den offenen Innenraum 32 des inneren Schwingungskörpers 3 ist ein Abgleichkörper 5 eingesetzt. Der Abgleichkörper 5 ist in Richtung der zentralen Längsachse X innerhalb des Innenraums 32 verstellbar angeordnet, so dass durch Verstellen des Abgleichkörpers 5 das Schwingungsverhalten des inneren Schwingungskörpers an das Schwingungsverhalten des äußeren Schwingungskörpers angepasst werden kann. Neben einer Abstimmung des Schwingungsverhaltens des inneren Schwingungskörpers 3 auf das Schwingungsverhalten des äußeren Schwingungskörpers 2 im Grundzustand ist auch eine veränderte Abstimmung möglich, falls sich das Schwingungsverhalten eines der Schwingungskörper 2, 3, insbesondere des äußeren Schwingungskörpers 2, durch beispielsweise anhaftendes Material mit der Zeit verändert.

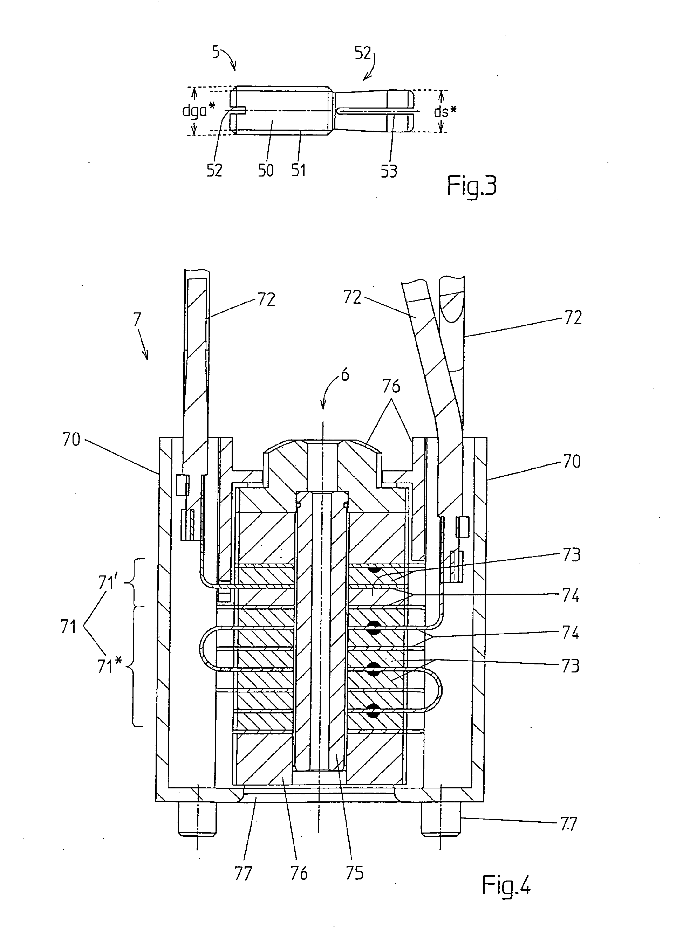

Der bevorzugte Schwingungskörper 5 besteht, wie auch aus Fig. 3 ersichtlich, aus einem Hauptkörperabschnitt 50, welcher außenseitig ein Außengewinde 51 aufweist. Das Außengewinde 51 ist auf ein Innengewinde 33 abgestimmt, welches innenseitig in der Wandung des Innenraums 32 des inneren Schwingungskörpers 3 ausgebildet ist. Dadurch kann der Abgleichkörper 5 in dem Innenraum 32 durch Verschrauben in vorderseitiger bzw. rückseitiger Richtung verstellt werden. Zum Verstellen dient vorzugsweise ein Schlitz 52, welcher in einer Stirnseite des Abgleichkörpers 5 ausgebildet ist. Den Zugang zu dem Schlitz 52 bildet eine Durchgangs- bzw. Zugangsöffnung 6, welche von der Rückseite her durch die verschiedenen Abschnitte und Komponenten der Füllstandmessvorrichtung 1 bis in den Innenraum 32 hindurchführt. Durch die Zugangsöffnung 6 kann der Abgleichkörper mit einem Schraubenzieher manuell verstellt werden. Natürlich ist auch das Einführen eines entsprechend geeigneten Verstellinstruments mit Motorantriebsteuerung möglich, beispielsweise für einen automatisierten Endabgleich des kompletten und voll funktionsfähigen Sensors.

Der Abgleichkörper 5 weist außerdem einen elastischen Abschnitt 52 auf. Der elastische Abschnitt 52 weist im entspannten Zustand zumindest in einem Teilabschnitt einen Außendurchmesser ds* auf, welcher größer als ein Innendurchmesser dgi des Hohlraums 32 ist. Um den elastischen Abschnitt in den Hohlraum 32 einführen zu können, muss der elastische Abschnitt 52 daher zusammengedrückt werden auf einen Außendurchmesser kleiner oder gleich dem Innendurchmesser dgi des Hohlraums 32. Dazu ist in dem elastischen Abschnitt 52 ein Elastizitäts-Schlitz 53 ausgebildet. Der Elastizitäts-Schlitz 53 führt quer durch den elastischen Abschnitt 52 hindurch. Die Breite des Elastizitäts-Schlitzes 53 ist so groß, dass der Außenumfang des elastischen Abschnitts 52 ausreichend zusammengedrückt werden kann. Insbesondere ist somit der Außendurchmesser ds* des elastischen Abschnitts 52 im entspannten Zustand auch größer als der Außenumfang dga* des Außengewindes 51 des Hauptkörperabschnitts 50 des Abgleichkörpers 5.

Um den Abgleichkörper 5 einfach in den Hohlraum 32 einführen zu können, kann dieser von einer offenen Seite des inneren Schwingungskörpers 3 in diesen eingeführt werden. Sobald der sich gegenüber dem Innendurchmesser dgi des Hohlraums 32 verbreiternde Abschnitt in den Innenraum 32 hineinbewegt, wird dieser aufgrund eines kegeligen Aufbaus zusammengedrückt, bietet aber zugleich durch die elastische Wirkung eine Spannkraft gegen die Innenwandung des Hohlraums 32, so dass der Abgleichkörper 5 in der jeweiligen Position in dem inneren Schwingungskörper 3 verspannt wird. Eine automatische Verstellung durch Schwingungsbewegungen des inneren Schwingungskörpers 3 kann somit nicht erfolgen.

Bevorzugt wird ein Abgleichkörper 5, bei dem der Übergangsbereich zwischen dem Hauptkörperabschnitt 50 und dem elastischen Abschnitt 52 bis auf ein Maß kleiner der Gewindetiefe des Außengewindes 51 verjüngt ist, wobei sich der elastische Abschnitt von diesem Punkt aus kegelig verbreitert.

Rückseitig ist an der Befestigungseinrichtung 4 eine Antriebs- und/oder Empfangsvorrichtung 7 befestigt. Die Antriebs- und/oder Empfangsvorrichtung 7 besteht im Wesentlichen aus einem Gehäuse 70 zur Aufnahme einer eigentlichen Antriebs- und/oder Empfangsvorrichtung 71 und zur Aufnahme von diversen Befestigungselementen und Anschlusskabeln 72. Die eigentliche Antriebs- und/oder Empfangsvorrichtung ist beim dargestellten Ausführungsbeispiel aus einer rückseitigen Antriebseinheit 71* und einer vorderseitigen Empfangseinheit 71 ausgebildet. Zentral verläuft längs der Längsachse X durch die Antriebs- und/oder Empfangsvorrichtung 7 sowie durch alle in diesem Bereich angeordneten Komponenten die Durchgangs- bzw. Zugangsöffnung 6, welche durch die Antriebs- und/oder Empfangsvorrichtung 7 hindurch einen zentralen Zugriff auf die Befestigungseinrichtung 6 bzw. den Hohlraum 32 des inneren Schwingungskörper 3 ermöglicht.

Die eigentliche Antriebs- und/oder Empfangsvorrichtung 71 besteht aus einer Vielzahl schichtförmig übereinander angeordneter Antriebs- und/oder Empfangselemente 73, insbesondere Piezo-Elemente, zwischen denen jeweils Elektroden 74 angeordnet sind. Die Elektroden 74 sind mit entsprechenden Anschlusskabeln 72 verbunden, um darüber Spannungen zum Erzeugen einer Schwingung anzulegen bzw. Spannungen abzuführen, welche durch eine empfangene Schwingung erzeugt werden. Zu Vermeidung von Beschädigungen und Erhöhung des Halts sowie zur Vermeidung von Kurzschlüssen führt zentral durch die Antriebs- und/oder Empfangsvorrichtung 7 eine Hülse 75 aus einem elektrisch isolierenden Material. Die einzelnen Piezo-Elemente 73 und Elektroden 74 sowie die Hülse 75 sind zwischen Befestigungselementen, d. h. Elementen einer Spanneinrichtung 76 derart eingespannt, dass eine vorderseitige Übertragung von Schwingungen von bzw. zu der Befestigungseinrichtung 4 und den Schwingungskörpern 2, 3 ermöglicht wird. Zur Erleichterung der Arretierung und zur Verbesserung der Schwingungsübertragung sind vorderseitig an dem Gehäuse 70 Hilfselemente 77 in Form von Stiften und Ausnehmungen ausgebildet, welche mit entsprechenden Gegenelementen auf der gegenüberliegenden rückseitigen Wandung der Befestigungseinrichtung 4 in Eingriff gebracht werden.

Zum Befestigen der Antriebs- und/oder Empfangsvorrichtung 7 an der Befestigungseinrichtung 4 dient vorzugsweise ein Verspannungsmechanismus als Befestigungseinrichtung 8. Diese besteht vorzugsweise aus einem quer zur Längsrichtung verlaufenden Befestigungselement 80 mit ebenfalls einer zentralen Durchgangsöffnung 6, wobei dieses Befestigungselement 80 rückseitig quer über die Antriebs- und/oder Empfangsvorrichtung 7 verlaufenden gespannt wird. Das Verspannen erfolgt beispielsweise mit einer Anordnung aus Schrauben, Gewindebolzen und Muttern 81 in für sich bekannter Art und Weise.

Vorzugsweise kann zur Übertragung der Schwingungen von der Membran 23 des äußeren Schwingungskörpers 2 auf die Rückseite bzw. das rückseitige Befestigungselement 80 der Antriebs- und/oder Empfangsvorrichtung 7 zumindest ein Verbindungselement 81 an der rückseitigen Wandung der Membran 23 befestigt sein, wobei dieses Verbindungselement 81 durch eine entsprechende Durchgangsöffnung 4* in der Befestigungseinrichtung vorzugsweise reibungsfrei hindurchläuft. Dieses Verbindungselement 81 führt neben der Antriebs- und/oder Empfangsvorrichtung 7 in rückseitiger Richtung bis zu dem quer verlaufenden Befestigungselement 80, so dass eine Schwingung der Membran 23 über dieses Verbindungselement 81 und das rückseitige Befestigungselement 80 zur Rückseite der Antriebs- und/oder Empfangsvorrichtung 7 übertragen wird.

Somit wird das Befestigungselement 80 über ein Verbindungselement 81 gegen die Befestigungseinrichtung 4 und insbesondere gegen den Verbindungsabschnitt 22, 23 des äußeren Schwingungskörpers 2 gespannt, wobei durch das Verspannen die Schwingungen des äußeren Schwingungskörpers 2 rückseitig gegen die Antriebs- und/oder Empfangsvorrichtung 7 übertragen werden.

Durch das Verklemmen bzw. Verspannen des Abgleichkörpers 5 wird eine gute Ankopplung an den Schwingstab bzw. inneren Schwingkörper 3 bewirkt. Dadurch wird das gesamte Schwingsystem gut abgleichbar, da ein nicht fest sitzender Abgleichkörper das Gesamtsystem dämpfen würde. Die Masse des Abgleichkörpers ist vorzugsweise so abgestimmt, dass der Abgleichkörper bei 100%-iger Maßhaltigkeit der Bauteile in der Mitte des offenen Innerraums 32 anzuordnen ist und somit durch Verstellen in vorderseitiger bzw. rückseitiger Richtung ein Ausgleich des Schwingungssystems ermöglicht wird. Eine zusätzliche Verdrehsicherung ist durch die Klemmwirkung der Schraube selbst nicht mehr erforderlich.

Das Material des Abgleichkörpers kann theoretisch beliebig gewählt werden, wobei ein Metall neben einer relativ hohen Masse auch den Vorteil bietet, hitzebeständig zu sein. Die Verwendung von nicht hitzebeständigen Kunststoff-Klemmbeschichtungen ist daher vorteilhafterweise nicht erforderlich. Auch ist zum Abgleich ein mechanischer Materialabtrag an der Schwingmembran für die Grundjustierung nicht mehr erforderlich.

Durch die zentrale Durchgangs- bzw. Zugangsöffnung 6 wird ein zentrischer Aufbau des gesamten Systems möglich, wobei ein Abgleich durch Verstellen des Abgleichkörpers 5 auch im eingebauten Zustand von der Rückseite der Füllstandsmessvorrichtung ermöglicht wird. Vorteilhafterweise ist auch nur ein einziger Antrieb erforderlich, der zu dem konzentrisch um die zentrale Achse des Gesamtsystems herum angeordnet ist und für die Übertragung von Schwingungen über einen Schwingungsübertragungsabschnitt von bzw. zu den Schwingungskörpern 2, 3 vorteilhaft anzuordnen ist. Der Schwingungsübertragungsabschnitt 4 besteht darin insbesondere aus der Befestigungseinrichtung 4 und gegebenenfalls weiteren Befestigungs- und Zwischenelementen der Antriebs- und Empfangsvorrichtung 7. Eine Abgleichung ist somit ohne eine Demontage von rückseitigen Bauelementen jederzeit einfach möglich.

## Patentansprüche

1. Innerer Schwingungskörper (3) für eine Füllstandsmessvorrichtung (1) mit einem Innenraum (32), in dem ein Abgleichkörper (5) verstellbar angeordnet ist, **dadurch gekennzeichnet, dass**
der Abgleichkörper (5) einen zumindest teilweise elastischen Abschnitt (52) aufweist, wobei im entspannten Zustand ein Außendurchmesser (ds*) des elastischen Abschnitts (52) größer als ein Innendurchmesser (dgi) des Innenraums (32) ist.

2. Schwingungskörper nach Anspruch 1, bei dem der Abgleichkörper (5) einen Schlitz (53) als Elastizitätsschlitz zum Zusammendrücken des elastischen Abschnitts (52) auf einen Außendurchmesser (ds*) kleiner oder gleich dem Innendurchmesser (dgi) des Innenraums (32) des inneren Schwingungskörpers (3) aufweist.

3. Innerer Schwingungskörper (3) nach Anspruch 1 oder 2, bei dem der Abgleichkörper (5) einen Schlitz (52) zum Verstellen des Abgleichkörpers und ein Außengewinde (51) aufweist und bei dem eine Innenwandung des Innenraums (32) ein Innengewinde (33) zum Einschrauben des Abgleichkörpers (5) aufweist.

4. Innerer Schwingungskörper (3) nach einem vorstehenden Anspruch mit einer Zugangsöffnung (6) zum Abgleichkörper (5) zum Verstellen des Abgleichkörpers (5) von der Vorderseite des Schwingungskörpers (3) aus.

5. Innerer Schwingungskörper (3) nach einem der Ansprüche 1 - 3 mit einer Zugangsöffnung (6) zum Abgleichkörper (5) zum Verstellen des Abgleichkörpers (5) von der Rückseite des Schwingungskörpers (3) aus.

6. Innerer Schwingungskörper nach Anspruch 5, bei dem die Zugangsöffnung (6) durch eine Antriebs- und/oder Empfangsvorrichtung (7, 71) hindurchführt.

7. Abgleichkörper (5) für einen Schwingungskörper (3) für eine Füllstandsmessvorrichtung (1) nach einem vorstehenden Anspruch, wobei der Abgleichkörper (5) einen zumindest teilweise elastischen Abschnitt (52) aufweist, wobei im entspannten Zustand des Abgleichkörpers ein Außendurchmesser (ds*) des elastischen Abschnitts (52) größer als ein Innendurchmesser (dgi) eines Innenraums (32) des Schwingungskörpers (3) ist.

8. Abgleichkörper nach Anspruch 7 mit einem Schlitz (53) als Elastizitäts-Schlitz zum Zusammendrücken des elastischen Abschnitts (52) auf einen Außendurchmesser (ds*) kleiner oder gleich dem Innendurchmesser (dgi) des Innenraums (32) des Schwingungskörpers (3).

9. Antriebs- und/oder Empfangsvorrichtung (7), insbesondere für eine Füllstandsmessvorrichtung (1) mit einem inneren Schwingungskörper (3) nach einem der Ansprüche 1 - 6, mit
- einer Antriebs- und/oder Empfangseinrichtung (71) zum Erzeugen bzw. Empfangen von Schwingungen zumindest eines Schwingungskörpers (2, 3),
- einem Schwingungsübertragungsabschnitt (4) zum Übertragen einer Schwingung zwischen dem zumindest einen Schwingungskörper (2, 3) einerseits und andererseits der Antriebs- und/oder Empfangseinrichtung (71), wobei die Antriebs- und/oder Empfangseinrichtung (71), der Schwingungsübertragungsabschnitt (6) und der zumindest eine Schwingungskörper (2, 3) sich im Betriebszustand längs einer Vorrichtungs-Längsachse (X) erstrecken,
**dadurch gekennzeichnet, dass**
in einer Richtung längs oder parallel der Vorrichtungs-Längsachse (X) eine Zugangsöffnung (6) durch die Antriebs- und/oder Empfangsvorrichtung (7), insbesondere durch die Antriebs- und/oder Empfangseinrichtung (71), und durch den Schwingungsübertragungsabschnitt (4) zum Zugriff auf den zumindest einen Schwingungskörper (3) ausgebildet ist.

10. Antriebs- und/oder Empfangsvorrichtung nach Anspruch 9, bei der die Zugangsöffnung (6) als Zugriffsöffnung zu einem Abgleichkörper (5) ausgebildet ist, wobei der Abgleichkörper (5) innerhalb des zumindest einen Schwingungskörpers (3) zum Abgleichen des Schwingungsverhaltens verstellbar angeordnet ist.

11. Antriebs- und/oder Empfangsvorrichtung nach Anspruch 9 oder 10, bei der die Antriebs- und/oder Empfangseinrichtung (7) symmetrisch um die Zugangsöffnung (6) herum ausgebildet ist.

12. Antriebs- und/oder Empfangsvorrichtung (7) nach einem der Ansprüche 9 - 11, bei der die Zugangsöffnung (6) in Form einer zylindrischen Bohrung ausgebildet ist.

13. Antriebs- und/oder Empfangsvorrichtung (7) nach einem der Ansprüche 9 - 12 mit einer Befestigungseinrichtung (8) zum Befestigen der Antriebs- und/oder Empfangsvorrichtung (7) im Bereich seitlich der Antriebs- und/oder Empfangseinrichtung (71) an einem Befestigungselement (4) des zumindest einen Schwingungskörpers (2, 3).

14. Füllstandsmessvorrichtung (1) mit
- zwei ineinander angeordneten Schwingungskörpern (2, 3), insbesondere gemäß einem der Ansprüche 1 - 6, die relativ zueinander in Schwingungen versetzbar sind,
- einer Antriebs- und/oder Empfangseinrichtung (71), insbesondere nach einem der Ansprüche 9 - 13, zum Anregen zumindest eines der Schwingungskörper (2, 3) bzw. zum Erfassen einer Schwingung zumindest eines der Schwingungskörper (2, 3) und
- einer Befestigungseinrichtung (4) zum Befestigen der Schwingungskörper (2, 3) an der Antriebs- und/oder Empfangseinrichtung (71),
- wobei der äußere Schwingungskörper (2) über einen zumindest teilweise elastisch wirkenden Verbindungsabschnitt (22, 23) an der Befestigungseinrichtung (4) befestigt ist,
- **dadurch gekennzeichnet, dass** die Befestigungseinrichtung (4) eine Durchgangsöffnung (4*) zum Durchführen eines Verbindungselements (81) aufweist und über dieses Verbindungselement die Antriebs- und/oder Empfangseinrichtung (71) rückseitig gegen die Befestigungseinrichtung (4), insbesondere gegen den Verbindungsabschnitt (22, 23) gespannt ist.

15. Füllstandsmessvorrichtung nach Anspruch 14, bei der das Verbindungselement (81) durch die Durchgangsöffnung (4*) der Befestigungseinrichtung (4) derart reibungsfrei hindurch geführt ist, dass Schwingungen eines rückseitigen Abschnitts der Antriebs- und/oder Empfangseinrichtung (71) über das Verbindungselement (81) der Befestigungseinrichtung (8) auf den Verbindungsabschnitt (22, 23) und/oder auf den äußeren Schwingungskörper (2) übertragen werden.
